# EUROPÄISCHE PATENTSCHRIFT

(11) **EP 3 700 802 B1**
(45) Veröffentlichungstag und Bekanntmachung des Hinweises auf die Patenterteilung: **08.06.2022**
(21) Anmeldenummer: 18795971.3
(22) Anmeldetag: 24.10.2018
(51) Int. Cl.: B62D 5/04, F16C 25/08, F16H 57/021, F16H 57/028, F16H 57/039

(54) **VORSPANNEINRICHTUNG**
PRESTRESSING DEVICE
DISPOSITIF DE PRÉCONTRAINTE

(30) Priorität: 27.10.2017 DE 102017219395
(43) Veröffentlichungstag der Anmeldung: 02.09.2020
(73) Patentinhaber: Volkswagen Aktiengesellschaft, 38440 Wolfsburg (DE)
(72) Erfinder: WILSKE, Ernst, 39291 Nedlitz (DE); ROGALL, Jens, 38448 Wolfsburg (DE); THIES, Joachim, 38304 Wolfenbüttel (DE); EICKMEIER, Till, 38165 Lehre (DE)
(86) Internationale Anmeldenummer: PCT/EP2018/079199
(87) Internationale Veröffentlichungsnummer: WO 2019/081596

(56) Entgegenhaltungen:
- EP-A1- 1 679 447
- JP-A- 2006 044 449
- KR-A- 20110 064 013
- US-A1- 2017 144 695
- US-A1- 2017 183 026

## Beschreibung

Die Erfindung bezieht sich auf eine Vorspanneinrichtung zum Drücken einer ein erstes Getriebeglied aufweisen Getriebewelle eines Getriebes gegen eine Verzahnung eines zweiten Getriebeglieds dieses Getriebes.

Eine solche Vorspanneinrichtung in Verbindung mit einem Schneckengetriebe, welche einen Stößel und eine Federeinrichtung zum Drücken des Stößels in Richtung der Getriebewelle aufweist, ist aus DE 10 2010 000 845 A1 bekannt. Das bekannte Schneckengetriebe weist ferner einen federbelasteten Nachstellmechanismus auf, mit dem über die Lebensdauer des Schneckengetriebes ein etwaiger Verschleiß am Schneckenrad und der Schneckenwelle ausgeglichen werden kann. Dies ist insbesondere bei Getrieben, bei welchen die Schneckenwelle oder das Schneckenrad aus Kunststoff gefertigt sind, von Vorteil. Der Nachstellmechanismus ist selbsthemmend, das heißt er gestattet lediglich eine Nachstellbewegung des Stößels in eine Richtung, nämlich auf die Schneckenwelle zu. Für das Funktionieren des Nachstellmechanismus ist es zudem notwendig, dass die Federsteifigkeit der Nachstellfeder kleiner ist als die Federsteifigkeit der ersten Federeinrichtung. Treten an der Verzahnung zwischen der Schneckenwelle und dem Schneckenrad hohe Verzahnungskräfte auf, besteht die Gefahr eines Verklemmens des Nachstellmechanismus.

Eine weitere Vorspanneinrichtung ist aus DE 10 2017 208 657.2 vom 22.05.2017 bekannt. Bei dieser ist der Stößel bei einer Bewegung gegen die Druckkraft der ersten Federeinrichtung mit einer zweiten Federeinrichtung in Eingriff bringbar, welche eine höhere Federsteifigkeit als die erste Federeinrichtung aufweist. Hierdurch wird neben einer Anfederung der Getriebewelle zusätzlich ein Überlastschutz für die Verzahnung zwischen dem ersten und zweiten Getriebeglied ermöglicht. Allerdings ist diese Vorspanneinrichtung im Hinblick auf die Anzahl der benötigten Bauteile, den benötigten Bauraum sowie die Montage aufwendig.

Der vorliegenden Erfindung liegt die Aufgabe zu Grunde, hier Abhilfe zu schaffen. Insbesondere zielt die Erfindung darauf ab, eine solche Vorspanneinrichtung mit Anfederung der Getriebewelle und Überlastschutz im Hinblick auf eine einfache Bauweise und Montage weiterzuentwickeln.

Diese Aufgabe wird durch eine Vorspanneinrichtung mit den Merkmalen von Patentanspruch 1 gelöst. Die erfindungsgemäße Vorspanneinrichtung umfasst insbesondere ein Gehäuse, einen Lageraußenkäfig zur Aufnahme eines die Getriebewelle drehbar lagernden Lagers, wobei der Lageraußenkäfig in dem Gehäuse angeordnet ist, und eine Blattfeder, die mit ihren Endabschnitten an jeweils zugehörigen Stützflanken des Lageraußenkäfigs abgestützt ist und die geeignet ist, mit einem zwischen den Stützflanken verlaufenden Mittelabschnitt gegen das Lager zu drücken.

Eine solche Vorspanneinrichtung lässt sich leichter herstellen, als die aus DE 10 2017 208 657.2 bekannte Vorspanneinrichtung. Zudem ist der Montageaufwand geringer. Die Patentalmendung US 2017/144695 A1 offenbart ein Schneckengetriebe für eine Lenkwelle, das eine Vorspanneinrichtung gemäß dem Oberbegriff von Anspruch 1 umfasst.

Vorteilhafte Ausgestaltungen der Erfindung sind Gegenstand weiterer Ansprüche. Insbesondere kann zusätzlich vorgesehen sein, dass mit zunehmender Vorspannung der Blattfeder gegen das Lager die wirksame Federlänge der Blattfeder zwischen ihren Abstützpunkten an den Stützflanken infolge zunehmender Biegung der Blattfeder abnimmt. Durch die sich verkürzende Federlänge ergibt sich eine mit zunehmender Vorspannung ansteigende Federsteifigkeit, wodurch eine progressive Federkennlinie erhalten wird. Hierdurch ist es möglich, kleine Schwankungen des Verzahnungseingriffs während des Betriebs weich abzufedern, stärkeren Abweichungen jedoch einen größeren Widerstand entgegenzusetzen, um einem Ausheben des Zahneingriffs zu begegnen.

Idealerweise kann die Abstimmung der Federeinrichtung und insbesondere der Blattfeder derart erfolgen, dass durch die Betriebskräfte ein maximales Ausheben des Zahneingriffs am Getriebe nicht über 51 bis 96 % der zur Verfügung stehenden Zahnflanken hinausgeht.

In einer Ausführungsvariante sind die Stützflanken des Lageraußenkäfigs in Bezug auf das Lager an gegenüberliegenden Seiten des Lageraußenkäfigs angeordnet, während die Blattfeder den Zwischenraum zwischen den einander gegenüberliegenden Stützflanken in der Art einer Brücke überspannt. Hierdurch lässt sich auf einfache Art und Weise eine von der Vorspannkraft abhängige Veränderung der wirksamen Federlänge verwirklichen.

Vorzugsweise sind die gegenüberliegenden Stützflanken derart zueinander angeordnet, dass gedachte Verlängerungen derselben einen Winkel von 80 bis 140° miteinander einschließen.

Weiterhin kann die Blattfeder derart angeordnet werden, dass diese tangential am Lager anliegt. Dies lässt sich beispielsweise durch eine Krümmung des Mittelabschnitts der Blattfeder zum Lager hin erzielen. Die Krümmung kann zum Lager hin je nach Bedarf konvex oder konkav ausgeführt sein. Wird der Mittelabschnitt um den Außenumfang des Lagers herumgeschmiegt, ergibt sich tendenziell eine kompaktere Bauweise.

In einer weiteren Ausführungsvariante ist vorgesehen, dass die Blattfeder derart auf die Betriebskräfte des Zahneingriffs zwischen dem ersten und zweiten Getriebeglied abgestimmt ist, dass deren Federkennlinie jenseits des idealen Wälzpunkts des Zahneingriffs zwischen dem ersten und zweiten Getriebeglied in Richtung eines Aushebens des Zahneingriffs progressiv zunimmt. Hierdurch ist es möglich, das Getriebe möglichst im idealen Wälzpunkt zu betreiben.

Prinzipiell kann über eine stark progressive Federkennlinie ein Ausheben des Zahneingriffs unterbunden werden. Es ist jedoch auch möglich, an dem Lageraußenkäfig zusätzlich ein Anschlagelement anzuordnen, das den maximalen Verschiebeweg des Lagers gegen die Blattfeder beschränkt. Hierdurch ergibt sich ein größerer Freiraum für die Gestaltung der Federkennlinie.

Das Anschlagelement kann beispielsweise ein Block aus Elastomermaterial sein, wodurch ein Anschlagen zusätzlich gedämpft wird.

Das Anschlagelement kann platzsparend in die Vorspanneinrichtung integriert sein, in dem dieses beispielsweise radial in einen zwischen dem Lageraußenkäfig und einer vom Lager abgewandten Rückseite der Blattfeder hineinragt.

Das Anschlagelement kann als separates Bauteil am Lageraußenkäfig montiert und gegebenenfalls zusätzlich verstellbar ausgeführt werden. Es ist jedoch auch möglich, dass Anschlagelement an den Lageraußenkäfig anzuspritzen, so dass dann lediglich ein einziges Integralbauteil gehandhabt werden muss.

Erfingungsgemäß ist eine erste Verstelleinrichtung und/oder eine zweite Verstelleinrichtung vorgesehen.

Die erste Verstelleinrichtung ist an der Vorspanneinrichtung vorgesehen und der Lageraußenkäfig ist gegenüber dem Gehäuse über die erste Verstelleinrichtung verstellbar, um die Getriebewelle in Richtung des zweiten Getriebeglieds zu verlagern. Hierdurch ist es möglich, die Vorspanneinrichtung im zunächst unverspannten Zustand am Getriebe zu montieren, was die Montage vereinfacht, und nach erfolgter Montage der Vorspanneinrichtung am Getriebe eine Vorspannung des Zahneingriffs durch Betätigung der Verstelleinrichtung vorzunehmen. Zudem ermöglicht dies eine möglichst präzise Einstellung der Anfederung der Getriebewelle mit dem ersten Getriebeglied an das zweite Getriebeglied.

Wenn die zweite Verstelleinrichtung vorgesehen ist, ist das Anschlagelement über die zweite Verstelleinrichtung in Richtung der Blattfeder verlagerbar, um den Überlastschutz auf den zur Verfügung stehenden Spielraum für die Verschiebung des Wälzpunkts des Zahneingriffs abzustimmen.

In einer Ausführungsvariante sind die erste und zweite Verstelleinrichtung jeweils als Stellschraube ausgebildet, wobei die erste Verstelleinrichtung in das Gehäuse und die zweite Verstelleinrichtung in die erste Verstelleinrichtung eingeschraubt sind. Durch diese Ineinanderschachtelung wird eine besonders kompakte Ausführung erzielt.

In einer weiteren nicht erfingungsgemäßen Ausführungsvariante ist die Vorspanneinrichtung hingegen frei von Einstellmitteln, wodurch die Anzahl der benötigten Bauteile und der Montageaufwand stark reduziert werden. Zur Gewährleistung eines Betriebs im idealen Wälzpunkt kann in diesem Fall vorgesehen werden, dass der Lageraußenkäfig mit radialem Versatz zur nominellen Achse der Getriebewelle im Gehäuse angeordnet ist, und zwar derart, dass der Zahneingriff zwischen dem ersten und zweiten Getriebeglied im unbelasteten Zustand gegenüber dem idealen Zahneingriff unter Nennlast verschoben ist und durch die Aushebekraft des Zahneingriffs unter Nennlast gegen die Kraft der Blattfeder bis zum idealen Zahneingriff und/oder über diesen hinaus verschiebbar ist, ohne den Zahneingriff jedoch aufzuheben. Eine Vorspanneinrichtung der vorstehend erläuterten Art kann beispielsweise an einem Schneckengetriebe mit einer Schneckenwelle und einem Schneckenrad zum Einsatz kommen. Hierbei werden die Getriebewelle mit dem ersten Getriebeglied durch die Schneckenwelle und das zweite Getriebeglied durch das Schneckenrad gebildet.

Eine Vorspanneinrichtung der vorstehend erläuterten Art kann insbesondere in einem Getriebe für eine Kraftfahrzeuglenkung zum Einsatz kommen, bei welcher ein spielfreier Eingriff zwischen der Schneckenwelle und dem Schneckenrad für ein gutes Lenkgefühl wünschenswert ist. Über das Getriebe kann ein Drehmoment in die Lenkung eingebracht werden, um die Fahrzeugräder zu lenken. Dies kann entweder unabhängig vom Fahrer oder aber zur Unterstützung des Fahrers erfolgen.

In einer Ausführungsvariante kann das Schneckenrad an einem mit einer Zahnstange kämmenden Lenkungsritzel angeordnet sein. Es ist jedoch auch möglich, über das Schneckenrad ein zusätzliches Ritzel anzutreiben, das mit der Zahnstange oder gegebenenfalls einer Lenksäule in Eingriff steht.

Nachfolgend wird die Erfindung anhand von in der Zeichnung dargestellten Ausführungsbeispielen näher erläutert. Die Zeichnung zeigt in:
- Figur 1: ein mögliches Beispiel für ein Getriebe mit einer Vorspanneinrichtung nach einem ersten Ausführungsbeispiel der Erfindung,
- Figur 2: eine Schnittansicht durch die Vorspanneinrichtung gemäß Figur 1,
- Figur 3: ein Diagramm zur Veranschaulichung der Feder kennt Linie der Vorspanneinrichtung gemäß Figur 1,
- Figur 4: eine Darstellung der Vorspanneinrichtung gemäß Figur 1 im Zustand während ihrer Montage im Getriebe,
- Figur 5: eine Darstellung der Vorspanneinrichtung gemäß Figur 1 nach erfolgter Vorspannung,
- Figur 6: eine Darstellung der Vorspanneinrichtung gemäß Figur 1 im Betrieb,
- Figur 7: ein Beispiel für eine erste Ausführungsvariante des Lageraußenkäfigs,
- Figur 8: ein Beispiel für eine zweite Ausführungsvariante des Lageraußenkäfigs,
- Figur 9: ein Beispiel für eine dritte Ausführungsvariante des Lageraußenkäfigs,
- Figur 10: ein Beispiel für eine vierte Ausführungsvariante des Lageraußenkäfigs,
- Figur 11: ein mögliches Beispiel für ein Getriebe mit einer Vorspanneinrichtung nach einem zweiten Ausführungsbeispiel der Erfindung vor der Montage der Vorspanneinrichtung,
- Figur 12: das Getriebe gemäß Figur 11 mit montierter und vorgespannter Vorspanneinrichtung, und in
- Figur 13: eine Schnittansicht der Vorspanneinrichtung nach dem zweiten Ausführungsbeispiel.

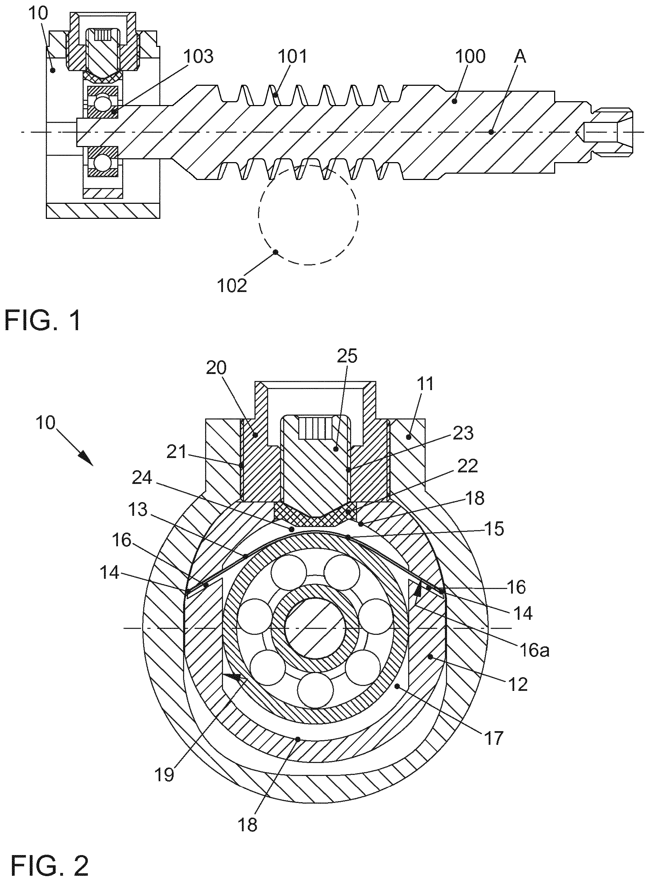

Die Ausführungsbeispiele beziehen sich jeweils auf eine Vorspanneinrichtung 10, durch welche eine Getriebewelle 100 mit einem ersten Getriebeglied 101 federelastisch gegen eine Verzahnung eines zweiten Getriebeglieds 102 gedrückt werden kann, um ein etwaiges Verzahnungsspiel auszugleichen. Entsprechende Getriebestufen sind beispielhaft in den Figuren 1, 11 und 12 abgebildet.

Insbesondere kann die das erste Getriebeglied 101 aufweisende Getriebewelle 100 als Schneckenwelle und das zweite Getriebeglied 102 als Schneckenrad ausgeführt sein. Die Erfindung ist jedoch nicht auf Schneckenradgetriebe beschränkt, sondern kann auch bei anderen Getriebetypen zum Einsatz kommen.

Ein möglicher Einsatzzweck für ein solches Getriebe ist ohne Beschränkung hierauf ein Lenkgetriebe für eine Kraftfahrzeuglenkung.

Die nachfolgend näher erläuterten Vorspanneinrichtungen 10 dienen dazu, eine Anfederung für die Getriebewelle 100 bereitzustellen, um das erste Getriebeglied 101 und das zweite Getriebeglied 102 in einem gewünschten Zahneingriff miteinander zu halten.

Zudem dienen die Vorspanneinrichtungen 10 als Überlastschutz, um die Verzahnung des ersten und zweiten Getriebegliedes 101 und 102 zu schützen. Die Vorspanneinrichtung 10 kann bei unerwarteten Stoßbelastungen einen Teil der Stoßenergie aufnehmen, so dass die zulässigen Spannungen an den Zahnflanken des ersten und zweiten Getriebeglieds 101 und 102 nicht überschritten werden und zudem ein Ausheben der Verzahnung nicht über die zur Verfügung stehenden Zahnflanken hinausgehen kann.

Die Vorspanneinrichtung 10 des ersten Ausführungsbeispiels, welche nachfolgend anhand der Figuren 1 bis 5 näher erläutert werden soll, umfasst zunächst ein Gehäuse 11, welches entweder Teil eines größeren Getriebegehäuses ist oder an einem solchen befestigbar ist.

Weiterhin umfasst die Vorspanneinrichtung 10 einen Lageraußenkäfig 12 zur Aufnahme eines die Getriebewelle 100 drehbar lagernden Lagers 103. Das Lager 103 kann beispielsweise als Wälzlager oder Gleitlager ausgeführt sein. Der dieses Lager 103 aufnehmende Lageraußenkäfig 12 ist in dem Gehäuse 11 angeordnet und festgelegt.

Ferner umfasst die Vorspanneinrichtung 10 eine Blattfeder 13, die mit ihren Endabschnitten 14 an einer jeweils zugehörigen Stützflanke 16a des Lageraußenkäfigs 12 abgestützt ist. Die Stützflanken 16a werden vorzugsweise durch Schlitze 16 gebildet, die innenseitig im Lageraußenkäfig 12 angeordnet sind. Endabschnitte 14 der Blattfeder 13 sind über einen Mittelabschnitt 15 integral miteinander verbunden. Der somit zwischen den Schlitzen 16 verlaufende Mittelabschnitt 15 der Blattfeder 13 ist geeignet, gegen das Lager 103 zu drücken. Durch eine entsprechende, vorzugsweise radiale Belastung des Lagers 103 kann für den Zahneingriff des ersten und zweiten Getriebeglieds 101 und 102 eine gewünschte Vorspannung eingestellt werden.

Der Lageraußenkäfig 12 erstreckt sich ringartig um das Lager 103 herum und weist eine in etwa langlochförmige Öffnung 17 auf, in welcher das Lager 103 mit Spiel zu den Enden 18 der Öffnung 17 und Kontakt zu deren Flanken 19 platziert ist. Hierdurch kann das Lager 103 innerhalb der langlochförmigen Öffnung 17 relativ zu dem Lageraußenkäfig 12 verschoben werden.

Der Lageraußenkäfig 12 weist weiterhin einen unrunden Außenumfang auf, so dass dieser gegenüber dem Gehäuse 11 gegen Verdrehen um die Drehachse A der Getriebewelle 100 gesichert ist, jedoch quer zur Drehachse A verlagert werden kann.

Die Verlagerung des Lageraußenkäfigs 12 in Richtung quer zur Drehachse A relativ zu dem Gehäuse 11 ist bei dem ersten Ausführungsbeispiel über eine erste Verstelleinrichtung 20 einstellbar. Diese erste Verstelleinrichtung 20 kann beispielsweise als Stellschraube ausgebildet sein, welche in ein Gewinde 21 am Gehäuse 11 eingeschraubt und gegen den Lageraußenkäfig 12 verspannt wird.

Wird der Lageraußenkäfig 12 gegenüber dem Gehäuse 11 verschoben, so verändert sich die Kraft, welche die Blattfeder 13 auf das Lager 103 ausübt und damit die Vorspannung der Verzahnung zwischen dem ersten und zweiten Getriebeglied 101 und 102.

Wie bereits erwähnt, stützt sich hierzu die Blattfeder 13 in den Schlitzen 16 des Lageraußenkäfigs 12 ab. Die Schlitze 16 des Lageraußenkäfigs 12 sind in Bezug auf das Lager 103 vorzugsweise an gegenüberliegenden Seiten, hier den Flanken 19 des Lageraußenkäfigs 12 angeordnet. Sie sind derart dimensioniert, dass sich die Endabschnitte 14 bei einer Biegung der Blattfeder 13 innerhalb der Schlitze 16 krümmen können, während sich diese jeweils an einer Stützflanke 16a des zugehörigen Schlitzes 16 abstützen.

In einer vorteilhaften Ausführungsvariante überspannt die Blattfeder 13 den Zwischenraum zwischen den einander gegenüberliegenden Schlitzen 16 in der Art einer Brücke. Bei dem dargestellten Ausführungsbeispiel sind die einander gegenüberliegenden Schlitze 16 zu einander angewinkelt, und zwar derart, dass gedachte Verlängerungen der einander gegenüberliegenden Schlitze 16 einen Winkel von 80 bis 140° miteinander einschließen. Die Blattfeder 13 kann zudem in ihrem Mittelabschnitt 15 entsprechend gekrümmt sein, so dass sich diese von der Seite des Lagers 103 ausgesehen konkav an den Außenumfang des Lagers 103 anschmiegt.

Es ist jedoch auch möglich, eine konvex gekrümmte Blattfeder 13 zu verwenden. In diesem Fall wird man vorteilhafter Weise die Neigung der Stützflanken 16a im Vergleich zu dem dargestellten Ausführungsbeispiel umkehren.

Ferner ist es möglich, eine im entspannten Zustand nicht-gekrümmte Blattfeder 13 zu verwenden, sofern es die Bauraumverhältnisse zulassen.

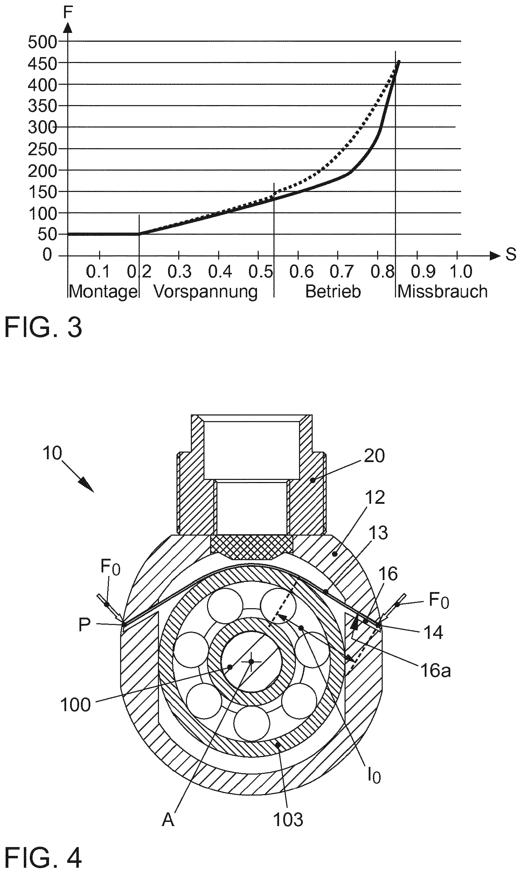

Das Spiel der Endabschnitte 14 der Blattfeder 13 innerhalb der Schlitze 16 ist derart ausgelegt, dass mit zunehmender Vorspannung der Blattfeder 13 gegen das Lager 103 die wirksame Federlänge I der Blattfeder 13 zwischen ihren Abstützpunkten P an den Stützflanken 16a in den Schlitzen 16 infolge zunehmender Biegung der Blattfeder 13 abnimmt wie dies anhand der Figuren 4 bis 6 veranschaulicht ist.

Figur 4 zeigt den Zustand der Vorspanneinrichtung 10 im Zustand ihrer Montage an der Getriebewelle 100. Das Lager 103 kann hierfür bereits an der Getriebewelle 100 montiert sein. Die Blattfeder 13 befindet sich in unbelastetem Zustand. Sie kann entweder nach Montage des Lageraußenkäfigs 12 oder aber als Baueinheit zusammen mit diesem eingebaut werden. Ihre Endabschnitte 14 sind tief in die Schlitze 16 eingeschoben und dort abgestützt. Im ungespannten Zustand ist die Stützkraft F₀ im Schlitz 16 praktisch Null und die wirksame Federlänge lo der Blattfeder 13 maximal. Die wirksame Federlänge I₀ wird vorliegend als der Abstand zwischen dem Kontaktpunkt P des Endabschnitts 14 der Blattfeder 13 an der Flanke 16a des Schlitzes 16 und dem tangentialen Kontakt mit dem Lager 103 verstanden. Bei der in Figur 3 dargestellten Federkernlinie der Vorspanneinrichtung 10 entspricht dies dem Abschnitt "Montage".

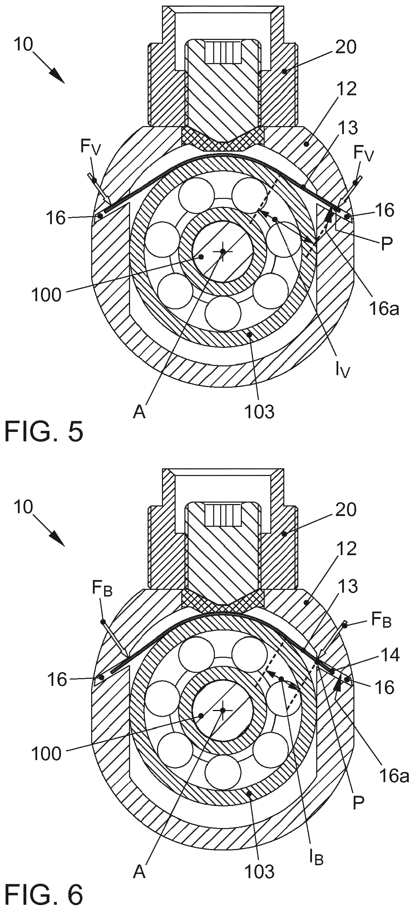

Wird nun durch Betätigen der Verstelleinrichtung 20 der Lageraußenkäfig 12 quer zur Drehachse A leicht verschoben, und zwar im Sinne einer zunehmenden Verspannung des ersten und zweiten Getriebeglieds 101 und 102 gegeneinander, so wird die Blattfeder 13 gespannt und krümmt sich etwas stärker als in Figur 4. Dieser Zustand ist in Figur 5 dargestellt. Infolge der zunehmenden Krümmung schmiegt sich die Blattfeder 13 über einen etwas längeren Umfangsabschnitt an das Lager 103 an. Gleichzeitig wandert der Kontaktpunkt P mit der Stützflanke 16a des Schlitzes 16 nach innen, wodurch sich die wirksame Federlänge I_{V} während des Vorspannvorgangs verkürzt. Dies führt zu einem Anstieg der in Figur 3 dargestellten Federkennlinie im Abschnitt "Vorspannung".

Die Vorspannung kann so ausgeführt werden, dass hierdurch eine künstliche Verschiebung des idealen Wälzpunkts des Zahneingriffs zwischen dem ersten und zweiten Getriebeglied 101 und 102 eingestellt wird. Die erforderliche Verschiebung ist abhängig von den Toleranzen des Getriebes und den umgebenden Bauteilen sowie ferner von einer gewünschten erforderlichen Rückstellkraft resultierend aus dem am Getriebe anliegenden Nennmoment und der Verzahnungsgeometrie.

Im Betrieb des Getriebes soll die eingestellte Verschiebung in Abhängigkeit des anliegenden Nennmoments wieder überbrückt werden, um im Idealfall ein Laufen des Getriebes im idealen Wälzpunkt der Verzahnung zu erzielen. Eine darüberhinausgehende Verschiebung in Richtung eines Aushebens des Zahneingriffs soll hingegen vermieden werden. Dazu kann die Federkennlinie für den Betriebsbereich jenseits des idealen Wälzpunkts progressiv ansteigend ausgebildet werden, wie dies in Figur 3 im Abschnitt "Betrieb" zu erkennen ist.

Eine entsprechende Belastungssituation ist beispielhaft in Figur 6 dargestellt, bei welcher der Lageraußenkäfig 12 noch stärker als in Figur 5 gegenüber der Drehachse A verschoben und die Blattfeder 13 dementsprechend stärker gekrümmt ist. Dies führt bei entsprechend höheren Kontaktkräften F_{B} im Schlitz 16 zu einer weiteren Verkürzung der wirksamen Federlänge I_{B}, da der Kontaktpunkt P weiter einwärts wandert, und damit zu einer gewünscht steiferen Blattfeder 13.

Die Freimachung des Lageraußenkäfigs 12 ist geometrisch so gestaltet, dass es zu einer Änderung der Anlage zwischen der Blattfeder 13 und dem Lageraußenkäfig 12, d.h. einem Wandern des Kontaktpunkts P in Abhängigkeit der Relativverschiebung zwischen dem Lageraußenkäfig 12 und dem Lager 103 und somit des Aushebewegs des Zahneingriffs zwischen dem ersten und zweiten Getriebeglied 101 und 102 kommt. Diese Änderung der Anlage ist als Änderung der wirksamen Federlänge zu verstehen. Die in Figur 3 dargestellte Federkennlinie kann beispielsweise so gestaltet werden, dass ein maximales Ausheben bei absehbaren Betriebskräften nicht über 51 bis 96 % der zur Verfügung stehenden Zahnflanken hinausgeht.

Weiterhin kann, wie bei dem vorliegenden Ausführungsbeispiel dargestellt, an dem Lageraußenkäfig 12 zusätzlich ein Anschlagelement 22 angeordnet sein, das den maximalen Verschiebeweg des Lagers 103 gegen die Blattfeder 13 beschränkt. Dieses Anschlagselement 22 ist vorzugsweise jenseits des in Figur 3 mit "Betrieb" gekennzeichneten Abschnitts der Federkennlinie wirksam. Das Anschlagselement 22 dient dazu, die Verzahnung im Missbrauchsfall zu schützen.

Das Anschlagelement 22 kann beispielsweise als ein Block aus Elastomermaterial ausgeführt sein, welches hierdurch eine zusätzliche dämpfende Funktion durch Energieabsorption bereitstellt.

In einer Ausführungsvariante ragt das Anschlagelement 22 radial in einen Zwischenraum 24 hinein, der zwischen einem Ende 18 der Öffnung 17 des Lageraußenkäfigs 12 und einer vom Lager 103 abgewandten Rückseite der Blattfeder 13 gebildet wird.

Das Anschlagelement 22 kann beispielsweise an den Lageraußenkäfig 12 angespritzt sein. Es ist jedoch auch möglich, dieses separat zu befestigen und/oder verstellbar auszuführen.

Bei der Vorspanneinrichtung 10 des ersten Ausführungsbeispiels ist dazu eine zweite Verstelleinrichtung 25 vorgesehen, über welche das Anschlagelement 22 in Richtung der Blattfeder 13 verlagerbar ist. Die zweite Verstelleinrichtung 25 kann als Stellschraube mit einem Gewinde 23 ausgebildet sein, so dass sich unter Berücksichtigung der herstellungstechnisch kaum vermeidbaren Toleranzen eine gute Abstimmung des maximalen Verschiebewegs einstellen lässt.

Während die erste Verstelleinrichtung 20 für die Verlagerung des Lageraußenkäfigs 12 in das Gehäuse 11 eingeschraubt ist, wird die zweite Verstelleinrichtung 25 vorzugsweise in die erste Verstelleinrichtung 20 eingeschraubt. Es ist jedoch auch möglich, die zweite Verstelleinrichtung 25 ebenfalls unmittelbar gegen das Gehäuse 11, d.h. ohne Zwischenschaltung der ersten Verstelleinrichtung 20 abzustützen.

Die vorstehend erläuterte Vorspanneinrichtung 10 ermöglicht eine präzise Anfederung der Getriebewelle 100 sowie einen zuverlässigen Überlastschutz. Sie zeichnet sich zudem durch eine vergleichsweise einfache Bauweise und Montage aus.

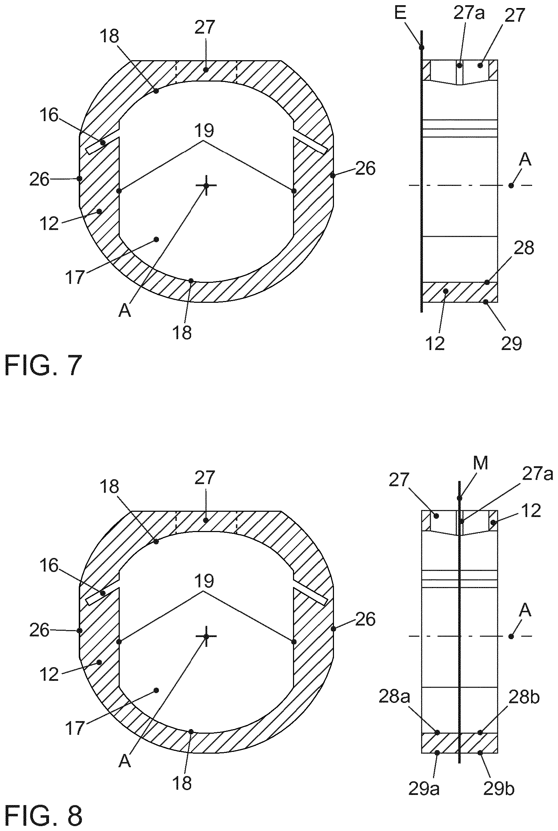

In den Figuren 7 bis 10 sind verschiedene Varianten für die Herstellung des Lageraußenkäfigs 12 dargestellt, der vorzugsweise aus einem Kunststoff gefertigt ist. Gegebenenfalls kann an diesen auch gleich das Anschlagelement 22 angespritzt sein.

Figur 7 zeigt eine erste Ausführungsvariante eines einteiligen Lageraußenkäfigs 12 mit einseitiger Entformung. Der Lageraußenkäfig 12 weist einen unrunden Außenumfang mit abgeflachten Führungsabschnitten 26 zur Linearführung quer zur Drehachse A auf. Weiterhin weist dieser eine langlochförmige Öffnung 17 mit gerundeten Enden 18 auf, welche durch gerade, einander gegenüberliegende Flanken 19 verbunden sind. An den Flanken 19 sind Freimachung für die Stützflanken 16a beispielsweise in Form von Schlitzen 16 ausgebildet.

Zudem ist an dem Lageraußenkäfig 12 eine Ausnehmung 27 zur Aufnahme des Anschlagelements 22 und gegebenenfalls der zugehörigen zweiten Verstelleinrichtung 25 vorgesehen.

Die Ausnehmung 27 kann zusätzlich eine Freimachung 27a als Verdreh- und/oder Verliersicherung für das Anschlagelement 22 aufweisen.

Die Formtrennung des zugehörigen Formwerkzeugs erfolgt auf einer außenseitigen Lichtkante E des Lageraußenkäfigs 12 quer zur Drehachse A. Entformungsschrägen 28 und 29 an den Innen- und Außenseiten erleichtern die Entnahme aus dem Formwerkzeug.

Figur 8 zeigt eine Modifikation der in Figur 7 dargestellten Ausführungsvariante dahingehend, dass die Formtrennung nicht auf der Lichtkante, sondern in einer Mittelebene M quer zur Drehachse A vorgenommen ist. Die Entformungsschrägen 28a und 28b bzw. 29a und 29b an den Innen- und Außenseiten sind entsprechend angepasst.

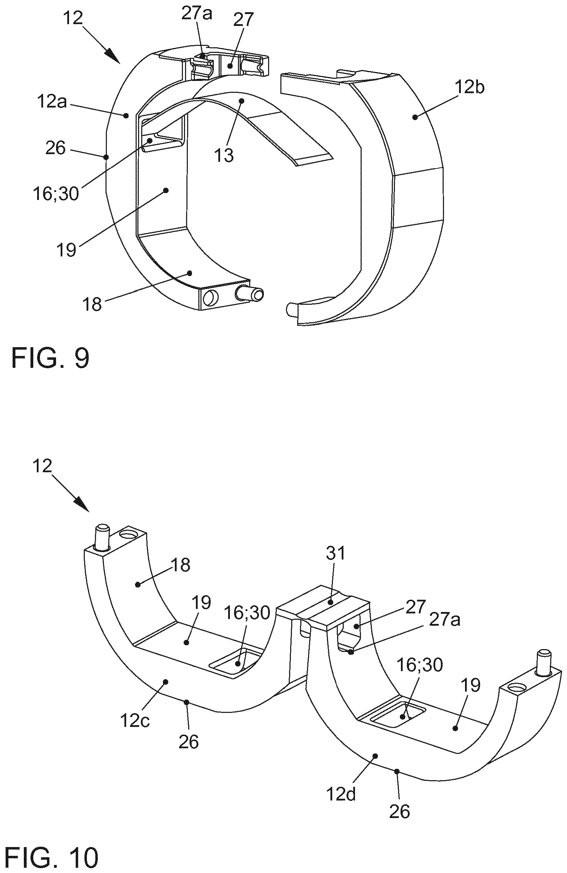

Figur 9 zeigt eine weitere Modifikation des Lageraußenkäfigs 12, welcher eine zweiteilige Bauweise aufweist. Die entsprechenden Lageraußenkäfigteile 12a und 12b können beispielsweise miteinander verklipst, verklebt oder in sonstiger Weise aneinander befestigt sein.

Insbesondere können die Lageraußenkäfigteile 12a und 12b als Gleichteile ausgeführt sein welche um 180° zueinander verdreht miteinander verbunden werden.

Die zweiteilige Bauweise gestattet es ferner, die Schlitze 16 als seitlich geschlossene Taschen 30 auszubilden, welche für die Blattfeder 13 einen zusätzlichen seitlichen Halt bieten. Zudem können Entformungsschrägen entfallen, wodurch sich eine gleichmäßigere Abstützung im Gehäuse 11 sowie am Lager 103 erzielen lässt. Zudem gestattet dies eine sehr gleichmäßige Belastung der Blattfeder 13.

Im Übrigen entspricht der Lageraußenkäfig 12 gemäß Figur 9 den vorstehend erläuterten Varianten.

Figur 10 zeigt als weitere Ausführungsvariante für den Lageraußenkäfig 12 eine einteilige Bauweise, bei welcher zwei Lageraußenkäfighälften 12c und 12 d über ein Filmscharnier 31 oder dergleichen miteinander verbunden hergestellt werden. Auch hier werden für die Entformung an den Innen- und Außenseiten keine Entformungsschrägen im Sinne der Varianten gemäß den Figuren 7 und 8 benötigt.

Die Lageraußenkäfighälften 12c und 12d werden durch Zusammenklappen des Filmscharniers 31 zu einem geschlossenen Ring zusammengesetzt, um einen Lageraußenkäfig 12 mit den oben erläuterten Eigenschaften zu bilden. Dabei werden die freien Enden der Lageraußenkäfighälften 12c und 12d miteinander verklipst, verklebt oder in sonstiger Weise aneinander befestigt.

Wie bei der Variante in Figur 9 können auch hier die Schlitze 16 als seitlich geschlossene Taschen 30 ausgebildet werden.

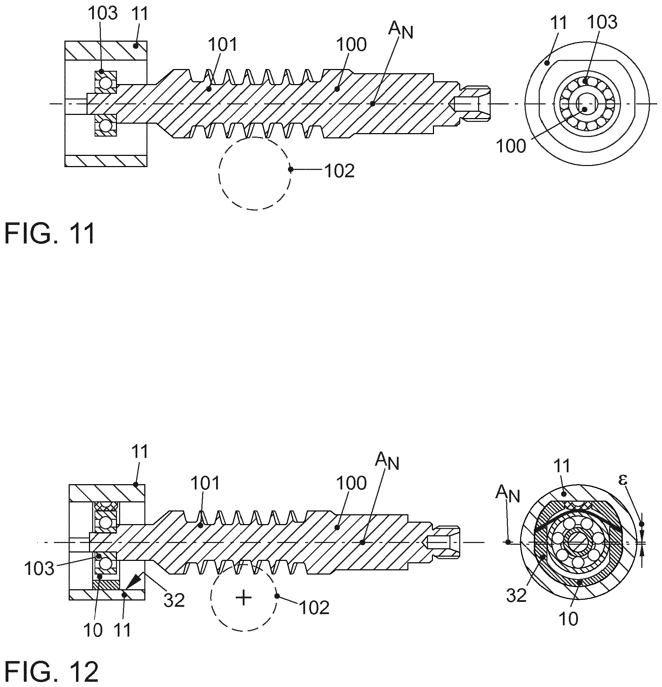

In den Figuren 11 bis 13 ist ein zweites Ausführungsbeispiel für eine erfindungsgemäße Vorspanneinrichtung 10' dargestellt, welches sich von dem ersten Ausführungsbeispiel durch den Entfall der ersten und zweiten Verstelleinrichtungen 20 und 25 unterscheidet. Hierdurch werden Maßnahmen zum Abdichten von Gewinden der Verstelleinrichtungen 20 und 25 eingespart.

Zudem entfallen Fertigung- und Montagezeiten während des Einstellvorgangs der Vorspannung.

Überdies wird eine erhebliche Bauteilreduzierung im Vergleich zum ersten Ausführungsbeispiel erzielt.

Im Übrigen entspricht das zweite Ausführungsbeispiel dem ersten Ausführungsbeispiel, wobei gleichartige Bauteile in den Figuren 11 bis 13 dementsprechend mit gleichen Bezugszeichen versehen sind, sofern nachfolgend nichts anderes dargestellt ist.

Bei dem zweiten Ausführungsbeispiel wird die Vorspannung der Blattfeder 13 nicht durch ein aktives Verschieben des Lageraußenkäfigs 12 mittels der Verstelleinrichtung 20 erreicht, sondern durch einen Versatz ε der mechanischen Bearbeitung des Gehäuses 11 zur nominalen Achse A_{N} der Getriebewelle 100. Dieser Versatz ε ergibt sich infolge bekannter Form- und Lagetoleranzen sowie Wärmedehnungen.

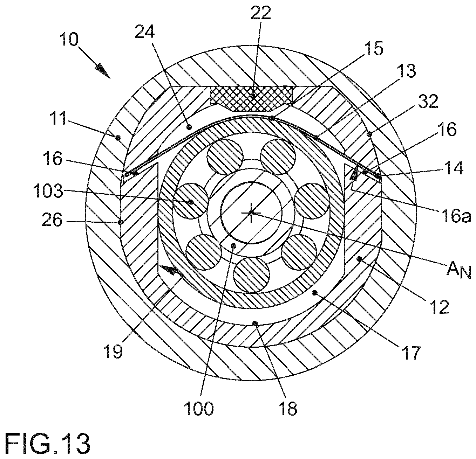

Eine Verschiebbarkeit quer zur Drehachse A zwischen dem Lageraußenkäfig 12 und dem Gehäuse 11 wird vorliegend nicht benötigt, so dass der Lageraußenkäfig 12 in das Gehäuse 11 eingepasst werden kann. Die federnde Abstützung des Lagers 103 gegen die Blattfeder 13 bleibt allerdings selbstverständlich erhalten. Gleiches gilt für die Möglichkeit, ein Anschlagelement 22 vorzusehen, welches vorzugsweise, wie in Figur 13 dargestellt in den Lageraußenkäfig 12 montiert oder an diesen angespritzt sein kann.

Bei der Montage kann der Lageraußenkäfig 12 entweder außerhalb des Gehäuses 11 auf ein Loslager der Getriebewelle 100 montiert werden oder aber wie im Fall des ersten Ausführungsbeispiels dann eingefügt werden, wenn die Getriebewelle 100 nebst Lager 103 bereits im Gehäuse 11 verbaut sind.

Die Blattfeder 13 ist hierbei vorzugsweise bereits im Lageraußenkäfig 12 montiert.

Die gewünschte Vorspannung zur Verringerung des Verzahnungsspiels zwischen dem ersten und zweiten Getriebeelement 101 und 102 wird dadurch erzeugt, dass die Aufnahme 32 für den Lageraußenkäfig 12 im Gehäuse 11 auf Höhe des Loslagers der Getriebewelle 100 zur nominellen Achse A_{N} der Getriebewelle 100 um den Versatz ε versetzt bearbeitet ist.

Die Vorspanneinrichtung 10 des zweiten Ausführungsbeispiels ermöglicht eine präzise Anfederung der Getriebewelle 100 sowie einen zuverlässigen Überlastschutz. Sie zeichnet sich zudem durch eine gegenüber dem ersten Ausführungsbeispiel noch weiter vereinfachte Bauweise und Montage aus.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel und dessen Abwandlungen beschränkt, sondern umfasst alle durch die Patentansprüche definierten Ausgestaltungen.

### Bezugszeichenliste

- 10: Vorspanneinrichtung
- 11: Gehäuse
- 12: Lageraußenkäfig
- 12a, 12b: Lageraußenkäfigteil
- 12c, 12d: Lageraußenkäfighälfte
- 13: Blattfeder
- 14: Ende der Blattfeder
- 15: Mittelabschnitt der Blattfeder
- 16: Schlitz
- 16a: Stützflanke
- 17: Öffnung
- 18: Ende
- 19: Flanke
- 20: erste Verstelleinrichtung
- 21: Gewinde
- 22: Anschlagelement
- 23: Gewinde
- 24: Zwischenraum
- 25: zweite Verstelleinrichtung
- 26: Führungsabschnitten
- 27: Ausnehmung
- 27a: Freimachung
- 28, 28a, 28b: Entformungsschräge innen
- 29, 29a, 29b: Entformungsschräge außen
- 30: Tasche
- 31: Filmscharnier
- 32: Aufnahmeöffnung
- 100: Getriebewelle
- 101: erstes Getriebeglied
- 102: zweites Getriebeglied
- 103: Lager
- A: Drehachse
- A_{N}: nominale Drehachse
- E: Lichtkante
- F₀: Federkraft bei der Montage
- F_{V}: Vorspannkraft der Blattfeder
- F_{B}: Federkraft im Betrieb
- I₀: wirksame Federlänge bei der Montage
- I_{V}: wirksame Federlänge bei Vorspannkraft
- I_{B}: wirksame Federlänge bei Federkraft im Betrieb
- M: Mittelebene
- P: Kontakt
- ε: Versatz

## Patentansprüche

1. Vorspanneinrichtung (10) zum Drücken einer ein erstes Getriebeglied (101) aufweisenden Getriebewelle (100) eines Getriebes gegen eine Verzahnung eines zweiten Getriebeglieds (102) dieses Getriebes, umfassend:
ein Gehäuse (11),
einen Lageraußenkäfig (12) zur Aufnahme eines die Getriebewelle (100) drehbar lagernden Lagers (103), wobei der Lageraußenkäfig (12) in dem Gehäuse (12) angeordnet ist,
eine Blattfeder (13), die mit ihren Endabschnitten (14) an jeweils zugehörigen Stützflanken (16a) des Lageraußenkäfigs (12) abgestützt ist und die geeignet ist, mit einem zwischen den Stützflanken (16a) verlaufenden Mittelabschnitt (15) gegen das Lager (103) zu drücken **dadurch gekennzeichnet, dass** eine erste Verstelleinrichtung (20) vorgesehen ist, über welche der Lageraußenkäfig (12) gegenüber dem Gehäuse (11) verstellbar ist, um die Getriebewelle (100) in Richtung des zweiten Getriebeglieds (102) zu verlagern und/oder
eine zweite Verstelleinrichtung (25) vorgesehen ist, über welche ein Anschlagelement (22) in Richtung der Blattfeder (13) verlagerbar ist, vorzugsweise die erste und zweite Verstelleinrichtung (20, 25) jeweils als Stellschraube ausgebildet sind, wobei die erste Verstelleinrichtung (20) in das Gehäuse (11) und die zweite Verstelleinrichtung (25) in die erste Verstelleinrichtung (20) eingeschraubt sind.

2. Vorspanneinrichtung (10) nach Anspruch 1, **dadurch gekennzeichnet, dass** mit zunehmender Vorspannung der Blattfeder (13) gegen das Lager (103) die wirksame Federlänge der Blattfeder (13) zwischen ihren Abstützpunkten an den Stützflanken (16a) infolge zunehmender Biegung der Blattfeder (13) abnimmt.

3. Vorspanneinrichtung (10) nach Anspruch 1 oder 2, **dadurch gekennzeichnet, dass** die Stützflanken (16a) des Lageraußenkäfigs (12) in Bezug auf das Lager (103) an gegenüberliegenden Seiten des Lageraußenkäfigs (12) angeordnet sind und die Blattfeder (13) den Zwischenraum zwischen den einander gegenüberliegenden Stützflanken (16a) in der Art einer Brücke zu überspannt und/oder gedachte Verlängerungen der einander gegenüberliegenden Stützflanken (16a) einen Winkel von 80 bis 140° miteinander einschließen.

4. Vorspanneinrichtung (10) nach einem der Ansprüche 1 bis 3, **dadurch gekennzeichnet, dass** die Blattfeder (13) geeignet ist, tangential am Lager (103) anzuliegen und/oder der Mittelabschnitt (15) der Blattfeder (13) zum Lager (103) hin konvex oder konkav gekrümmt ist.

5. Vorspanneinrichtung (10) nach einem der Ansprüche 1 bis 4, **dadurch gekennzeichnet, dass** die Blattfeder (13) derart auf die Betriebskräfte des Zahneingriffs zwischen dem ersten und zweiten Getriebeglied (101, 102) abgestimmt ist, dass deren Federkennlinie jenseits des idealen Wälzpunkts des Zahneingriffs zwischen dem ersten und zweiten Getriebeglied (101, 102) in Richtung eines Aushebens des Zahneingriffs progressiv zunimmt.

6. Vorspanneinrichtung (10) nach einem der Ansprüche 1 bis 5, **dadurch gekennzeichnet, dass** an dem Lageraußenkäfig (12) das Anschlagelement (22) angeordnet ist, das den maximalen Verschiebeweg des Lagers (103) gegen die Blattfeder (13) beschränkt.

7. Vorspanneinrichtung (10) nach Anspruch 6, **dadurch gekennzeichnet, dass** das Anschlagelement (22) ein Block aus Elastomermaterial ist und/oder das Anschlagelement (22) radial in einen zwischen dem Lageraußenkäfig (12) und einer vom Lager (103) abgewandten Rückseite der Blattfeder (13) gebildeten Zwischenraum (24) hineinragt.

8. Vorspanneinrichtung (10) nach Anspruch 6 oder 7, **dadurch gekennzeichnet, dass** das Anschlagelement (22) an den Lageraußenkäfig (12) angespritzt ist.

9. Schneckengetriebe, umfassend:
eine Schneckenwelle,
ein Schneckenrad, und
eine Vorspanneinrichtung (10) nach einem der vorgenannten Ansprüche, wobei die das erste Getriebeglied (101) aufweisende Getriebewelle (100) die Schneckenwelle ist und das zweite Getriebeglied (102) das Schneckenrad ist.

10. Lenkgetriebe für eine Kraftfahrzeuglenkung, umfassend eine Vorspanneinrichtung (10) nach einem der Ansprüche 1 bis 8 oder ein Schneckengetriebe nach Anspruch 9.

## Claims

1. A pretensioning device (10) for pressing a transmission shaft (100) of a transmission having a first transmission member (101) against a toothing of a second transmission member (102) of this transmission, comprising:
a housing (11),
an outer bearing cage (12) for receiving a bearing (103) that rotatably mounts the transmission shaft (100), wherein the outer bearing cage (12) is arranged in the housing (12),
a leaf spring (13) whose end sections (14) are supported on associated supporting flanks (16a) of the outer bearing cage (12) and which is suitable for pressing a central section (15) extending between the supporting flanks (16a) against the bearing (103), **characterized in that** a first adjusting device (20) is provided, by means of which the outer bearing cage (12) is adjustable with respect to the housing (11) in order to move the transmission shaft (100) in the direction of the second transmission member (102), and/or
a second adjusting device (25) is provided, by means of which a stop element (22) can be moved in the direction of the leaf spring (13), the first and second adjusting devices (20, 25) are each preferably designed as an adjusting screw, wherein the first adjusting device (20) is screwed into the housing (11) and the second adjusting device (25) is screwed into the first adjusting device (20).

2. The pretensioning device (10) according to Claim 1, **characterized in that** as the pretension of the leaf spring (13) against the bearing (103) increases, the effective spring length of the leaf spring (13) between its support points on the supporting flanks (16a) decreases as a result of increased bending of the leaf spring (13).

3. The pretensioning device (10) according to Claim 1 or 2, **characterized in that** with respect to the bearing (103), the supporting flanks (16a) of the outer bearing cage (12) are arranged on opposite sides of the outer bearing cage (12), and the leaf spring (13) spans the intermediate space between the opposing supporting flanks (16a) in the manner of a bridge, and/or imaginary extensions of the opposing supporting flanks (16a) enclose an angle of 80 to 140° with one another.

4. The pretensioning device (10) according to any of Claims 1 to 3, **characterized in that** the leaf spring (13) is suitable for tangentially abutting on the bearing (103), and/or the central section (15) of the leaf spring (13) is curved convexly or concavely relative to the bearing (103).

5. The pretensioning device (10) according to any of Claims 1 to 4, **characterized in that** the leaf spring (13) is adapted to the operating forces of the tooth engagement between the first and second transmission members (101, 102) in such a way that its spring characteristic progressively increases beyond the ideal pitch point of the tooth engagement between the first and second transmission members (101, 102) in the direction of a disengagement of the tooth engagement.

6. The pretensioning device (10) according to any of Claims 1 to 5, **characterized in that** the stop element (22) is arranged on the outer bearing cage (12) and limits the maximum displacement path of the bearing (103) against the leaf spring (13).

7. The pretensioning device (10) according to Claim 6, **characterized in that** the stop element (22) is a block of elastomer material, and/or the stop element (22) extends radially into an intermediate space (24) formed between the outer bearing cage (12) and a rear side of the leaf spring (13) facing away from the bearing (103).

8. The pretensioning device (10) according to Claim 6 or 7, **characterized in that** the stop element (22) is injection-molded onto the outer bearing cage (12).

9. A worm gear comprising:
a worm shaft,
a worm wheel, and
a pretensioning device (10) according to any of the preceding claims, wherein the transmission shaft (100) having the first transmission member (101) is the worm shaft, and the second transmission member (102) is the worm wheel.

10. A steering gear for a motor vehicle steering system, comprising a pretensioning device (10) according to any of Claims 1 to 8, or a worm gear according to Claim 9.

## Revendications

1. Dispositif de sollicitation (10) pour la pression d'un arbre de transmission (100) présentant un élément de transmission (101) d'une transmission contre une denture d'un deuxième élément de transmission (102) de cette transmission, comprenant :
un carter (11),
une cage extérieure de roulement (12) pour la réception d'un palier (103) logeant en rotation l'arbre de transmission (100), la cage extérieure de palier (12) étant disposée dans le carter (12),
un ressort à lame (13), lequel est appuyé par ses sections d'extrémité (14) à des flancs d'appui (16 a) correspondants de la cage extérieure de palier (12) et qui est adapté pour appuyer contre le palier (103) avec une section centrale (15) s'étendant entre les flancs d'appui (16 a), **caractérisé en ce qu'**un premier dispositif de déplacement (20) est prévu, à travers lequel la cage extérieure de palier (12) peut être déplacée par rapport au carter (11), pour déplacer l'arbre de transmission (100) dans la direction du deuxième élément de transmission (102) et/ou
un deuxième dispositif de déplacement (25) est prévu, à travers lequel un élément de butée (22) peut être déplacé dans la direction du ressort à lame (13), le premier et le deuxième dispositifs de déplacement (20, 25) étant formés respectivement comme une vis de réglage, le premier dispositif de déplacement (20) étant vissé dans le carter (11) et le deuxième dispositif de déplacement (25) étant vissé dans le premier dispositif de déplacement (20).

2. Dispositif de sollicitation (10) selon la revendication 1, **caractérisé en ce qu'**avec la sollicitation croissante du ressort à lame (13) contre le palier (103), la longueur de ressort efficace du ressort à lame (13) diminue entre ses points d'appui sur les flancs d'appui (16a) suite à un fléchissement du ressort à lame (13).

3. Dispositif de sollicitation (10) selon la revendication 1 ou 2, **caractérisé en ce que** les flancs d'appui (16 a) de la cage extérieure de palier (12) sont disposés sur des côtés opposés de la cage extérieure de palier (12) par rapport au palier (103) et le ressort à lame (12) enjambe l'espace intermédiaire entre les flancs d'appui (16 a) opposés l'un à l'autre à la manière d'un pont et/ou des prolongements imaginaires des flancs d'appui (16 a) opposés l'un à l'autre enferment ensemble un angle de 80 à 140°.

4. Dispositif de sollicitation (10) selon l'une quelconque des revendications 1 à 3, **caractérisé en ce que** le ressort à lame (13) est adapté pour reposer tangentiellement contre le palier (103) et/ou la section centrale (15) du ressort à lame (13) vers le palier (103) est courbée de manière convexe ou concave.

5. Dispositif de sollicitation (10) selon l'une quelconque des revendications 1 à 4, **caractérisé en ce que** le ressort à lame (13) est adapté de telle façon aux forces de fonctionnement de l'engrènement des dents entre le premier et le deuxième élément de transmission (101, 102), que sa courbe caractéristique de ressort augmente progressivement au-delà du point d'engrènement idéal de l'engrènement de dents entre le premier et le deuxième éléments de transmission (101, 102) dans la direction d'un soulèvement de l'engrènement de dents.

6. Dispositif de sollicitation (10) selon l'une quelconque des revendications 1 à 5, **caractérisé en ce que** l'élément de butée (22) est disposé sur la cage extérieure de palier (12), lequel limite le chemin de déplacement maximal du palier (103) contre le ressort à lame (13).

7. Dispositif de sollicitation (10) selon la revendication 6, **caractérisé en ce que** l'élément de butée (22) est un bloc de matière élastomère et/ou l'élément de butée (22) fait saillie radialement dans un espace intermédiaire (24) formé par la cage extérieure de palier (12) et une face arrière opposée au palier (103) du ressort à lame (13).

8. Dispositif de sollicitation (10) selon la revendication 6 ou 7, **caractérisé en ce que** l'élément de butée (22) est formé par injection sur la cage extérieure de palier (12).

9. Vis sans fin, comprenant :
un arbre de vis sans fin,
une roue à vis sans fin, et
un dispositif de sollicitation (10) selon l'une quelconque des revendications mentionnées ci-dessus, l'arbre de transmission (100) présentant le premier élément de transmission (101) étant l'arbre de vis sans fin et le deuxième élément de transmission (102) étant la roue à vis sans fin.

10. Mécanisme de direction pour la direction de véhicule automobile, comprenant un dispositif de sollicitation (10) selon l'une quelconque des revendications 1 à 8 ou une vis sans fin selon la revendication 9.
